# EUROPEAN PATENT SPECIFICATION

(11) **EP 2 875 591 B1**
(45) Date of publication and mention of the grant of the patent: **22.03.2017**
(21) Application number: 12748580.3
(22) Date of filing: 20.07.2012
(51) Int. Cl.: H04B 7/06, H04W 56/00, H04B 17/00

(54) **ADJUSTING RECEIVE-TRANSMIT TIMING TO COMPENSATE FOR SWITCHING ERRORS IN A COMMUNICATION SYSTEM**
EINSTELLUNG EINER EMPFANGS- UND ÜBERTRAGUNGS-ZEITPLANUNG FÜR SCHALTFEHLER IN EINEM KOMMUNIKATIONSSYSTEM
RÉGLAGE D'UNE SYNCHRONISATION ENTRE UNE RÉCEPTION ET UNE TRANSMISSION POUR COMPENSER DES ERREURS DE COMMUTATION DANS UN SYSTÈME DE COMMUNICATION

(43) Date of publication of application: 27.05.2015
(73) Proprietor: Telefonaktiebolaget LM Ericsson (publ), 164 83 Stockholm (SE)
(72) Inventor: NEJATIAN, Alireza, 752 60 Uppsala (SE); KAZMI, Muhammad, 167 39 Bromma (SE)
(74) Representative: Ericsson
(86) International application number: PCT/SE2012/050847
(87) International publication number: WO 2014/014396

(56) References cited:
- WO-A1-2006/004526
- WO-A2-2010/123229
- NOKIA SIEMENS NETWORKS ET AL: "Discussion of Time Misalignment and Antenna Array Calibration", 3GPP DRAFT; R1-113153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 5 October 2011 (2011-10-05), XP050538507, [retrieved on 2011-10-05]
- RENESAS MOBILE EUROPE LTD: "Further considerations on calculated timing advance for carrier aggregation", 3GPP DRAFT; R4-114253, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Athens, Greece; 20110822, 17 August 2011 (2011-08-17), XP050543351, [retrieved on 2011-08-17]
- RENESAS MOBILE EUROPE LTD: "On the real-life DL MIMO issues", 3GPP DRAFT; R1-112313, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 17 August 2011 (2011-08-17), XP050537762, [retrieved on 2011-08-17]
- HUAWEI ET AL: "TA group management", 3GPP DRAFT; R2-113996 TA GROUP MANAGEMENT_CYH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050539913, [retrieved on 2011-08-16]

## Description

### TECHNICAL FIELD

The present invention relates generally to transmissions from multi-antenna radio transceivers, and more particularly relates to techniques for compensating timing alignment problems in such systems.

### BACKGROUND

The cellular technologies specified by the 3rd-Generation Partnership Project (3GPP) are the most widely deployed in the world. The most widely used wide-band systems are based on Wideband Code-Division Multiple Access (WCDMA) technology, standardized by 3GPP as the Universal Terrestrial Radio Access Network (UTRAN), and so-called Long-Term Evolution (LTE), standardized as the Evolved Universal Terrestrial Radio Access Network (E-UTRAN). The first deployments of LTE systems are based on Release 8 of the 3GPP specifications. However, development of LTE is continuing, and is currently focused on the development of Release 11 of the 3GPP specifications.

LTE supports operation in several different modes, including a Frequency-Division Duplexing (FDD) mode, a Time-Division Duplexing (TDD) mode, and a half-duplex mode. Operation of LTE in TDD mode allows the use of unpaired spectrum, which is valuable in those cases where an operator has fragmented spectrum. FDD mode, on the other hand, requires paired spectrum, in which one band of frequencies is used for the uplink (mobile terminal-to-base station transmissions) and another for the downlink (base station-to-mobile terminal transmissions).

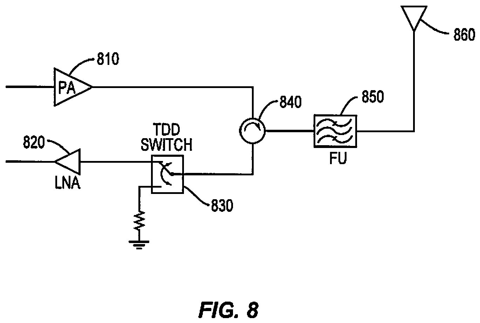

Figure 8 is a block diagram illustrating several components of a TDD transceiver, as might be found in a TDD radio node. A radio-frequency (RF) signal for transmission is amplified in power amplifier (PA) 810, passes through circulator to filter 850, and is then transmitted by antenna 860. A received signal from antenna passes through filter 850 in the opposite direction, through circulator 840 to TDD switch 830 and low-noise amplifier 820. From low-noise amplifier 820 the received signal is typically downconverted and digitized (not shown) for further processing. Note that isolation between the transmitter and receiver functions is provided by the circulator 840, which may provide 10-20 dB of isolation, for example, and TDD switch 830, which may provide several tens of dB in additional isolation when in its "off" position. (In a radio base station application, TDD switch 830 is turned "on" during uplink operation and "off" during downlink transmission.) This isolation is necessary to prevent high-power signals from the PA 810 from reaching the relatively delicate LNA 820.

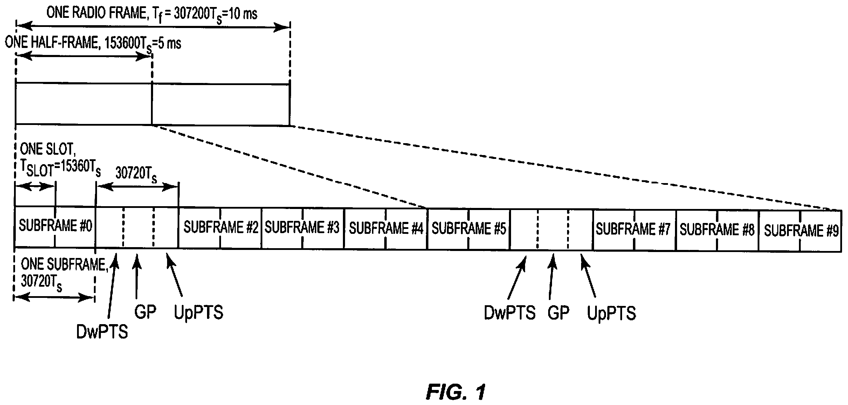

In LTE, downlink and uplink transmission are based on radio frames of 10-millisecond duration. There are two radio frame structures in LTE, known as "type 1" for FDD and "type 2" for TDD. An example LTE TDD radio frame is illustrated in Figure 1. Note that lengths for the various elements of the LTE frame are expressed in time units of Tₛ = (1/(15000 x 2048) = 32.55 nanoseconds. Each 10-millisecond radio frame consists of two half-frames of 5 milliseconds each, or 1,535,600 Tₛ. Each half-frame consists of five subframes of 1 millisecond length; the sub-frames are numbered from zero to ten across the subframe. Each sub-frame, in turn, is made up of two slots, each 0.5 milliseconds in length.

In FDD, both uplink and downlink frames have the same structure, but occupy different frequencies. In a TDD deployment, each subframe within any given frame is either a downlink subframe, an uplink subframe or a special subframe. Subframes 0, 1 and 2 are always fixed as downlink subframes, special subframes, and uplink subframes, respectively. The others can be varied - various combinations of these subframes in a TDD frame give rise to different TDD configurations that are specified by the 3GPP standards.

In the example illustrated in Figure 1, subframes 1 and 6 of the LTE TDD frame are special subframes, which include the three fields DwPTS, GP, and UpPTS. These three fields correspond to a downlink portion of the special subframe, a guard period, and an uplink portion of the special subframe, respectively. The special subframe serves as a transition point from downlink to uplink configuration. Thus, the configuration pictured in Figure 1 corresponds to configurations that have a downlink-to-uplink switch-point periodicity of 5 milliseconds. Several other frame configurations have a downlink-to-uplink switch-point periodicity of 10 milliseconds. In these frame configurations, the special subframe appears only at subframe 1.

The supported uplink-downlink configurations in LTE TDD are listed in Table 1 where, for each subframe in a radio frame, "D" denotes the subframe is reserved for downlink transmissions, "U" denotes the subframe is reserved for uplink transmissions and "S" denotes a special subframe with the three fields DwPTS, GP and UpPTS. The lengths of DwPTS and UpPTS for each of several special subframe configurations are given by Table 2. The length of GP can be determined from the constraint that the total length of DwPTS, GP and UpPTS must equal to 1 millisecond. As noted above and as can be seen in Table 1, uplink-downlink configurations with both 5-millisecond and 10-millisecond downlink-to-uplink switch-point periodicities are supported. In the case of 5-millisecond downlink-to-uplink switch-point periodicity, the special subframe exists in both half-frames, while in the case of 10-millisecond switch-point periodicity, the special subframe exists in the first half-frame only. In all configurations, subframes 0 and 5 and DwPTS are always reserved for downlink transmission. UpPTS and the subframe immediately following the special subframe are always reserved for uplink transmission.

In a TDD cell, a TDD configuration is characterized by both uplink-downlink configuration and special subframe configuration. Therefore the term "TDD configuration," as used hereinafter, refers to a combination of uplink-downlink configuration (e.g., one of the combinations in Table 1) and a special subframe configuration (e.g., one of the configurations in Table 2) configured in a TDD cell. It should be noted that more TDD configurations may be introduced in future.

**Table 1: Uplink-downlink configurations**

| **Uplink-downlink configuration** | **Downlink-to-Uplink Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | D | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

**Table 2: Configuration of special subframe (lengths of DwPTS/GP/UpPTS)**

| **Special subframe configuration** | **Normal cyclic prefix in downlink** | | | **Extended cyclic prefix in downlink** | | |
|---|---|---|---|---|---|---|
| | **DwPTS** | **UpPTS** | | **DwPTS** | **UpPTS** | |
| | | **Normal cyclic prefix in uplink** | **Extended cyclic prefix in uplink** | | **Normal cyclic prefix in uplink** | **Extended cyclic prefix in uplink** |
| 0 | 6592·*T*ₛ | 2192·*T*ₛ | 2560·*T*ₛ | 7680·*T*ₛ | 2192·*T*ₛ | 2560·*T*ₛ |
| 1 | 19760·*T*ₛ | | | 20480·*T*ₛ | | |
| 2 | 21952·*T*ₛ | | | 23040·*T*ₛ | | |
| 3 | 24144·*T*ₛ | | | 25600·*T*ₛ | | |
| 4 | 26336·*T*ₛ | | | 76807·*T*ₛ | 4384·*T*ₛ | 5120·*Tₛ* |
| 5 | 6592·*T*ₛ | 4384·*T*ₛ | 5120·*T*ₛ | 20480·*T*ₛ | | |
| 6 | 19760·*T*ₛ | | | 23040·*T*ₛ | | |
| 7 | 21952·*T*ₛ | | | - | - | - |
| 8 | 24144·*T*ₛ | | | - | - | - |

LTE supports several multi-antenna transmission modes, including, for example, transmit-diversity transmission, multiple-input-multiple-output (MIMO) transmission, and beamforming. Carrier aggregation may also involve the use of multiple antennas and/or multiple radio chains. Other examples involving multiple transmit antennas and/or multiple radio chains include spatial multiplexing transmission, coordinated-multipoint (CoMP) scenarios, and transmissions from Remote Radio Units (RRUs). In order to benefit from these multi-antenna techniques, the transmitted signals should be aligned in time, phase and amplitude at each of the multiple antennas involved in transmission towards the mobile terminal ("user equipment," or "UE," in 3GPP terminology) or any wireless device.

The time alignment error (TAE) is defined as the largest timing difference between any two signals from antennas at the transmitting antenna ports. 3GPP specifications provide time-alignment requirements for several transmission modes, including requirements specified for operation with and without carrier aggregation. For example, according to the 3GPP document 3GPP TS 36.104, "Evolved Universal Terrestrial Radio Access (E-UTRA); Base Station (BS) radio transmission and reception," v. 10.7.0 (July 2012), the maximum allowable TAE for MIMO or TX diversity is 65 nanoseconds. More particularly, the 3GPP specification states: "For MIMO or TX diversity transmissions, at each carrier frequency, TAE shall not exceed 65 ns. For intra-band contiguous carrier aggregation, with or without MIMO or TX diversity, TAE shall not exceed 130 ns. For inter-band carrier aggregation, with or without MIMO or TX diversity, TAE shall not exceed 1.3 µs."

In TDD mode, the time alignment is more complicated than in FDD mode. This is because of TX/RX switching, which changes the direction of the transmission from forward (base-station-to-mobile-terminal) to reverse (mobile-terminal-to-base-station), and vice-versa. Time alignment in this case is affected by the radio components, just as it is in FDD, but is also affected by the response time of the TX/RX switching action. Hence in order for the TDD systems to work properly it is important to have an effective control over the TDD switching time, i.e., over the precise time at which the radio transceiver switches from uplink to downlink operation, and vice-versa.

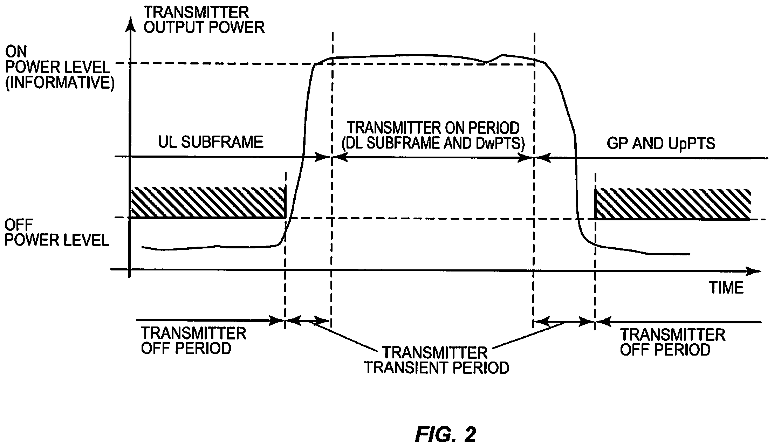

3GPP has defined transient periods in the downlink and the uplink. These transient periods are the time intervals during which the downlink and uplink change states from the OFF period to the ON period, or vice-versa, and have a duration of 17 microseconds in LTE TDD systems. Figure 2 illustrates the relations among the transmitter ON period, the transmitter OFF period, and the transmitter transient period, for a special subframe. In practice, devices may have a shorter transient period than 17 microseconds for either or both of the transitions from OFF to ON and from ON to OFF.

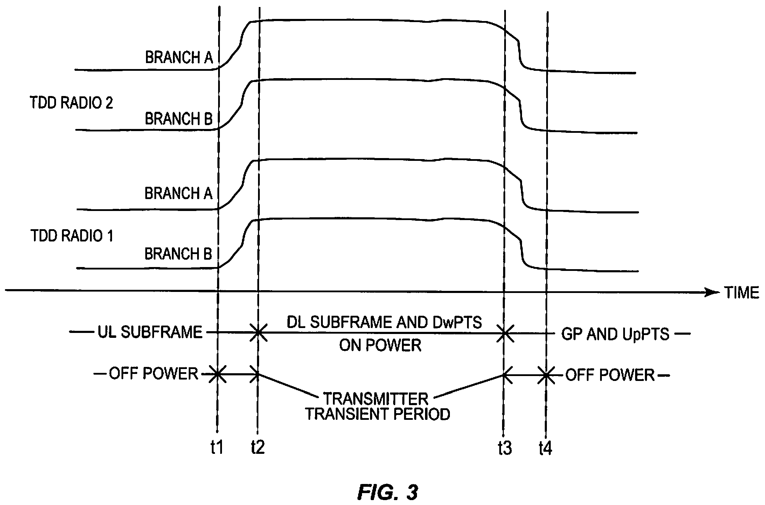

In a TDD system with multiple radios involved in operation, all TDD radios can be synchronized to the same reference signal, such as the 1-pulse-per-second (PPS) pulse from a Global Positioning System (GPS) device. Each TDD radio should lock to this reference signal first, and then provide output signals BBCLK (Baseband Clock) and BFN (Basic Frame Number). The BFN phase is aligned to the phase of the reference signal, so that the TDD switching point at the radio's transceiver is aligned to the phase of the reference. Each TDD radio also typically includes a downlink delay-compensation function. This function may use several downlink delay buffers, for example, which can compensate digital and analog domain downlink delay in the TDD radio to ensure that signals transmitted from all transmit branches arrive at the antenna ports simultaneously, or within an acceptable margin of simultaneity. With the use of delay buffers, data to be transmitted in the downlink from at least one antenna is stored in the buffer until the data from all antennas becomes available for transmission. This is illustrated in Figure 3, which shows the OFF-to-ON and ON-to-OFF transitions at the transmitting antenna ports for two TDD radios, each with two branches. In this example, the transmitted signals arrive at their respective antennas at substantially the same time, so that the OFF-to-ON transitions fall between times t1 and t2 and the ON-to-OFF transitions fall between times t3 and t4. It should be appreciated that a similar scenario could be illustrated for more radio units and/or for radio units having more than two branches.

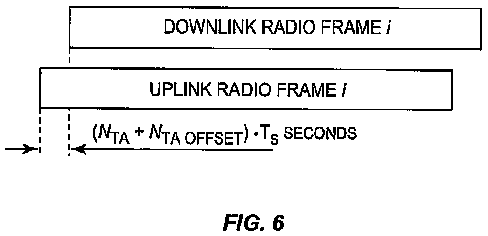

There is a pre-defined relation between the uplink-downlink frame timing in LTE. The transmission of uplink radio frame number *i* from the UE starts (*N*_{TA} + *N*_{TA offset}) × *T*ₛ seconds before the start of the corresponding downlink radio frame at the UE, where 0 ≤ *N_{TA}* ≤ 20512 and *N*_{TA offset} = 624 for frame structure type 2 (i.e., LTE TDD). This is illustrated in Figure 6.

Due to drift in downlink transmission timing and also due to UE mobility, the relation between the uplink and downlink timing needs to be actively maintained. Therefore the UE uplink transmission and downlink reception timings are controlled and management by a set of pre-defined rules, pre-defined requirements and signaling means.

For instance, in any given cell, several different UEs may be located at different locations, at different distances from the base station. Some cells may be quite large, with ranges up to 100 kilometers, for example. In this case, the signals from different UEs in the cell may be received at the serving radio node at very different times. In order to ensure the orthogonality of the signals received in uplink at the receiver of the radio node (e.g., serving eNode B), the UE transmissions from multiple UEs in a cell need to be time aligned. This means that the transmit timings of the UEs that are under the control of a given eNode B are adjusted to ensure that the UEs' transmitted signals arrive at the eNode B receiver at the same time, or at least within a fraction of the cyclic prefix (CP). This ensures that the eNode B receiver is able to use the same resources (i.e., the same Discrete Fourier Transform or Fast Fourier Transform resource) to receive and process the signals from multiple UEs.

Uplink time alignment at the eNode B is achieved by sending timing advance (TA) commands to the UE. These may be sent every 0.5 seconds, for example. In response to each TA command, the UE adjusts its transmission timing (increase or decrease), depending upon the value given by the TA command.

In a carrier aggregation system where two or more uplink carriers are used, a multiple TA group (TAG) can be configured by the network. In this case, TA may be applied independently on each TA group (TAG). In other words, a separate TA value is applied to each group of uplink carriers. Each TAG contains at least one serving cell. In other words, one TAG contains at least a primary serving cell. Other TAGs, if any, each contain at least one secondary serving cell.

In addition to TA-based adjustment of the uplink transmit timing, UEs are also required to autonomously adjust uplink timing in response to the drift in the eNode B transmit timing. More specifically, each UE is required to follow the change in the frame transmit timing of the serving cell and correspondingly adjust its transmission timing for each transmission. The UE typically uses one or more reference signals to track the downlink timing of the serving cell, such as the common reference signal, synchronization signals, etc.

Serving cell timing may change due to several different reasons, such as variation in radio conditions, imperfection in clocks, maintenance activities, or deliberate attempts by the network to change timing. The UE must track these changes to maintain the relationship between uplink and downlink transmissions required by the specification, as adjusted by the timing advance process. However, it is also required that the UE changes its uplink transmit timing (increase or decrease) at no more than a certain pre-defined slew rate. This is to make sure that the UE does not change timing too quickly.

This requirement stems from the fact that if the UE changes its uplink transmit timing in the order of several microseconds from subframe to subframe, the base station receiver may not be able to cope with the received signals. This will result in degradation of demodulation of signals transmitted by the UE. Typically, the eNode B receiver can handle, with some acceptable performance degradation, a received signal for which transmission timing has been changed up to 1-2 microseconds in a single transmission. However, if the UE changes its transmission timing by about 3 microseconds or more, the receiver at the radio network node may not be able to receive or demodulate the UE received signal.

More specifically, the pre-defined rules and requirements governing the uplink timing adjustments with pre-defined slew rates depend upon the system bandwidth. For instance, the 3GPP LTE standards specify that the maximum amount of the magnitude of the uplink timing change in one adjustment step is 100 nanoseconds for 5 MHz BW. The minimum aggregate uplink timing adjustment rate is 300 nanoseconds per second for 5 MHz BW. The maximum aggregate uplink timing adjustment rate is 1 microsecond per 200 milliseconds for 5 MHz BW.

It should be noted that if a UE receives a TA command from the network while autonomously changing its uplink timing, then it stops autonomous adjustment and instead applies the TA command to change its timing. Further, in a carrier aggregation scenario where multiple TA groups (TAGs) are configured by the network, the UE independently adjusts its uplink timing on each set of serving cells in a TAG.

EP 1 580 904 A1 describes a delay adjustment technique for a radio base station apparatus which communicates with mobile communication terminal apparatuses. A data control section generates and spreads a delay adjustment signal, multiplexes the spread delay adjustment signal with a spread signal of a main signal, and outputs the multiplexed signal. A delay control section receives the multiplexed signal of the delay adjustment signal and main signal from the data control section, receives a feedback signal of a transmitting signal from a radio frequency section, and compares the multiplexed signal with the feedback signal to thereby calculate a delay adjustment value.

"Handover in the 3GPP long term evolution (LTE) systems" by Jihai et al, mobile congress (GMC), 2010 global, IEEE, Piscataway, NJ, USA, 18 October 2010 (2010-10-18), pages 1-6, XP031800607, ISBN: 978-1-4244-9001-1 describes handover algorithms which can enhance performance of a LTE system.

As seen above, the use of multi-antenna transmission techniques and carrier aggregation complicates downlink and uplink timing alignment. In a TDD system in particular, the receive/transmit switching among multiple antenna branches of a radio network node may not be perfectly aligned. The switching misalignment between branches may result in the transmission from one branch interfering with the reception of a signal on another branch. Accordingly, techniques for reducing misalignment problems in multi-antenna and/or carrier aggregation systems are needed.

### SUMMARY

In TDD systems, because the same frequency is used in the uplink and downlink, transmission must take place in only one direction at a time. This means that the TDD radio at the base station must switch from transmit operation to receive operation, and vice-versa, between uplink and down frames. A single TDD radio may comprise of multiple antenna branches, and several radios may be involved in a multi-antenna transmission to and from mobile terminals (e.g., LTE UEs). In these scenarios, receive- transmit switching among the branches in a radio may not be perfectly time aligned, which can result in interference to the reception of signals from the UE at one or more branches. Further, if the isolation between the radios is insufficient then interference between branches across different radios may also occur. This degrades uplink performance and leads to loss of uplink user and system throughputs.

Disclosed below are techniques and apparatus for compensating for the time misalignment of receive-transmit switching between the signals from antenna branches of the same radio transceiver or between antenna branches of different radio transceiver in a TDD radio node, such as an LTE TDD eNode B. In some cases, this compensation is selectively performed, provided the time misalignment is above a threshold. Also disclosed below are techniques for adjusting mobile terminal transmit and/or receive timing to align with the timing of the TDD radio node.

An example method described in further detail below is suitable for implementation by an appropriately configured radio network node. This example method begins with the receiving of mobile terminal capability information for one or more mobile terminals, the capability information indicating that mobile terminal(s) can use assistance information to account for the adjustment of downlink timing. Some embodiments may be configured to do without this information, so this step may be regarded as optional.

Next, the radio network node detects a signal transmission timing for each of two or more antennas associated with the radio network node, for at least a first transmission period. This detecting may be performed at least at one of the following occasions, in some embodiments: when switching between uplink and downlink subframes in a TDD frame; when transmission power changes within the first transmission period; and when transmission power changes between OFDMA symbols within the first transmission period. The first transmission period may be one of: a radio frame; a subframe; a time slot; a transmission time interval, TTI; an OFDMA symbol; a special subframe in a Long-Term Evolution, LTE, TDD system; and a DwPTS field in an LTE TDD subframe. Other examples are possible. In some embodiments, the first transmission period is a radio frame designated by a pre-defined system frame number, or a portion of a radio frame designated by a pre-defined system frame number (SFN).

Next, the radio network node determines that transmit timing for at least one of the antennas is misaligned by at least a first threshold time interval, based on the detected signal transmission timings. In some systems, this comprises comparing one or more of the detected signal transmission timings to a reference time. In some cases, this reference time may be an external reference, such as a timing reference from a GPS receiver. In other cases, however, the reference time is the detected signal transmission timing for one of the antennas, so that the system is comparing one or more of the detected signal transmission timings to the transmission timing for one of the antennas, i.e., a reference antenna. In some embodiments, determining that transmit timing for at least one of the antennas is misaligned is based on detected signal transmission timings corresponding to multiple transmission periods, for each of the two or more antennas. Timings from the multiple transmission periods may be averaged, for example, to smooth the timing measurements.

The example method continues with the adjustment of transmit timing for at least one of the antennas for one or more subsequent transmission periods, responsive to determining that the transmission timing for at least one of the antennas is misaligned. In some cases, the adjustment may comprise adjusting transmit timing for the at least one antenna that is misaligned. In other cases, however, the radio network node may adjust the transmit timing for one or more antennas other than the antenna that is misaligned. In several embodiments, the adjustment of transmit timing is performed by adjusting a duration of a downlink transmit buffer duration. In some embodiments, the adjustment may be achieved by performing two or more successive adjustments at two or more corresponding transmission periods. In some cases, the radio network node may selectively decide to divide the necessary adjustment into two or more adjustments, performed at separate transmission periods, responsive to determining that the transmit timing for at least one of the antennas is misaligned by at least a second threshold time interval, greater than the first threshold time interval.

In some embodiments, adjustments of transmit timing are restricted to a predetermined subset of transmission periods. This predetermined subset of transmission periods may consist of transmission periods immediately prior to transmission periods used for the transmission of synchronization signals, for example. Alternatively, the adjustments may be restricted to transmission periods that contain a pre-defined signal, such as a synchronization signal, in some embodiments.

The adjustment of downlink transmit timing by the radio network node may be accompanied by or followed by the transmission of assistance information to one or more mobile terminals, to assist the mobile terminal in adjustment downlink reception timing and/or uplink transmission timing. The assistance information indicates that an adjustment to downlink transmission timing for at least one antenna is to occur or has occurred. In some embodiments, the assistance information specifies at least one of: an amount of adjustment; a timing for the adjustment of downlink timing; at least one antenna for which downlink timing is misaligned with a first threshold time interval; and at least one antenna for which downlink timing adjustment is to occur or has occurred. In some cases, the timing for the adjustment of downlink timing is specified in terms of a system frame number.

Some implementations of the illustrated process may further include the forwarding of information characterizing the transmit timing adjustment, or capability information for at least one mobile terminal, indicating that the mobile terminal can use assistance information to account for downlink timing adjusting, or both, to one or more fixed network nodes. This information can be used by the receiving node for any of several operational tasks, as discussed in detail earlier.

Another example method described in detail below is for adjusting downlink reception timing in a mobile terminal. This method begins with an optional step of sending capability information to the radio network node, the capability information indicating that the mobile terminal can use assistance information to account for the adjustment of downlink timing. This capability information can be used by the radio network node to determine whether and how to send assistance information to the mobile terminal. The method continues with receiving assistance information from a radio network node, the assistance information indicating that an adjustment of downlink timing is to occur or has occurred. In some embodiments, the assistance information specifies at least one of an amount of adjustment; a timing for the adjustment of downlink timing; at least one antenna for which downlink timing is misaligned with a first threshold time interval; and at least one antenna for which downlink timing adjustment is to occur. In some embodiments, the timing for the adjustment of downlink timing is specified in terms of a system frame number. The method continues with the adjusting of at least downlink reception timing based on the assistance information.

In addition to the methods summarized above, radio network node apparatus and mobile terminal apparatus adapted to carry out any of these techniques are also disclosed herein. Of course, the present invention is not limited to the above-summarized features and advantages. Indeed, those skilled in the art will recognize additional features and advantages upon reading the following detailed description, and upon viewing the accompanying drawings.

### BRIEF DESCRIPTION OF THE DRAWINGS

Figure 1 illustrates the time-domain radio frame structure for LTE TDD.
Figure 2 shows the relationship between the transmitter ON period, the transmitter OFF period, and the transmitter transient periods.
Figure 3 illustrates an example scenario in which two TDD radios have aligned transmit-receive switching times.
Figure 4 illustrates an example scenario in which a TDD radio has a misaligned switching time.
Figure 5 illustrates another scenario in which a TDD radio has a misaligned switching time.
Figure 6 shows the relationship between uplink and downlink frame timing in an LTE UE.
Figure 7 is a block diagram illustrating an example configuration for a radio network node according to some embodiments of the present invention.
Figure 8 schematically illustrates components of a TDD transceiver.
Figure 9 is a block diagram illustrating an example configuration for a mobile terminal according to some embodiments of the present invention.
Figure 10 is a process flow diagram showing an example method for controlling uplink and downlink timing, according to some embodiments of the present invention.
Figure 11 is another process flow diagram, illustrating a method for adjusting downlink reception timing in a mobile terminal.

### DETAILED DESCRIPTION

For illustrative purposes, several embodiments of the present invention will be described in the context of a Long-Term Evolution (LTE) system. Those skilled in the art will appreciate, however, that several embodiments of the present invention may be more generally applicable to other wireless communication systems, including, for example, WiMax (IEEE 802.16) systems.

In the following discussion, the term "radio network node" is used extensively. As that term is used herein, a radio network node serves mobile users in a cell or in a coverage area. In an LTE network, an eNode B is an example of a radio network node. More generally, base stations, Node Bs, donor eNode B serving relays, donor BS serving, relay nodes, etc., are radio network nodes. A radio network can be a TDD radio network node or a node controlling or serving a TDD radio node, a multi-standard (MSR) radio node, multi-RAT base station etc.

A "network node" can be a radio network node, as described above, or any other type of node in the fixed network. Other network nodes may communicate with a radio network node. Examples of other network nodes include, but are not limited to, a positioning node (e.g., an Evolved Serving Mobile Location Center (E-SMLC) in LTE), a Minimization of Drive Testing (MDT) node, a Self-Optimizing Network (SON) node, an Operations & Management (O&M) node, an Operational Support Systems (OSS) node, a network monitoring node, a network planning node, etc. The term "mobile terminal," as used herein, refers to a wireless device that communicates over a downlink and uplink with a radio network node, whether or not the device is mobile (e.g., a mobile telephone) or installed in a fixed position (e.g., a machine-to-machine device).

Because the following discussion uses LTE TDD systems as an example context for the inventive techniques described herein, the terms "subframe" and "time slot" are used extensively. In the LTE TDD context, a subframe can be a downlink subframe, an uplink subframe, or a special subframe, which in turn includes uplink and downlink fields. However techniques described herein are not limited to the TDD context in general and the detailed descriptions of these techniques as applied to subframes should be understood as more generally applicable to any transmission period or any time resource, whether that time resource is designated or corresponds to a transmission-time interval (TTI), time slot, slot, symbol, set or group of symbols, etc.

In a TDD scenario involving multi-antenna transmission, receive-transmit switching among the branches in a radio or among several radios may not be perfectly time aligned, which can result in interference to the reception of signals from the UE at one or more branches. There are several possible reasons for switching time misalignment.

For example, in the digital domain of the TDD radio, downlink delay buffers are used for radio downlink delay compensation. The downlink delay buffers are used to compensate total transmit-chain delay, which includes delays in the digital radio processing and digital to analogue conversion, as well as delays from the modulator, circulator filter unit (FU), and even switches. The default setting of downlink delay buffers is calibrated to a particular transmit-chain configuration, and therefore the total transmit-chain delay is generally very stable in a normal situation. However, if there is a defect in even a single component in the transmit-chain, the overall delay will be different compared with the calibrated or reference value. Furthermore, the radio may not be aware of such a problem. There are several reasons that may cause changes in delay through transmit-chain components, including component malfunction, aging of devices, hardware faults, incorrect logic, software bugs, and so on. In any of these cases, there can be a transmission misalignment problem if the radio still uses the pre-calibrated downlink delay buffer for delay compensation.

There are also other factors affecting the alignment of receive-transmit switching between branches. For instance, one of the components in the transmit chain might not be integrated and directly tested with the radio but instead may be designed and tested by a third party or separately. One example is the Tower Mounted Amplifier (TMA). A TMA is installed near antenna and is widely used to compensate the large loss of feed cable used between the radio base station and antenna, thereby improving the uplink receiver sensitivity. This in turn results in lower UE output power, improving the cost-efficiency of the network and extending the battery life of UEs. The receive-transmit switching time information (i.e., indicating the precise time for switching between uplink and downlink frames, and vice-versa) must be provided to the TMA in a TDD system. This signal needs to be synchronized with the base station. TMA switches add extra complexity to the transmit chain and increase the probability that one of the switches may go wrong. The probability that a switching event in a TDD system does not take place properly depends, of course, on the probability of correct functioning for each switch.

If downlink delay of one transmit branch is changed for any reason stated above, or if the receive-transmit switching does not occur at the correct time, then this particular transmit branch is no longer aligned with other branches. The result of this misalignment can cause several different problems and may have severe consequence. For instance, this misalignment may cause downlink performance degradation, including: user-throughput loss in case of higher-layer MIMO operation; system-throughput loss in case of higher layer MIMO operation; user-throughput loss in beamforming operation; and system-throughput loss in beamforming operation. Misalignment can also cause uplink performance degradation due to leakage of transmit power to one or more receiver branches. This may result in uplink user-throughput loss and overall system-throughput loss in the uplink.

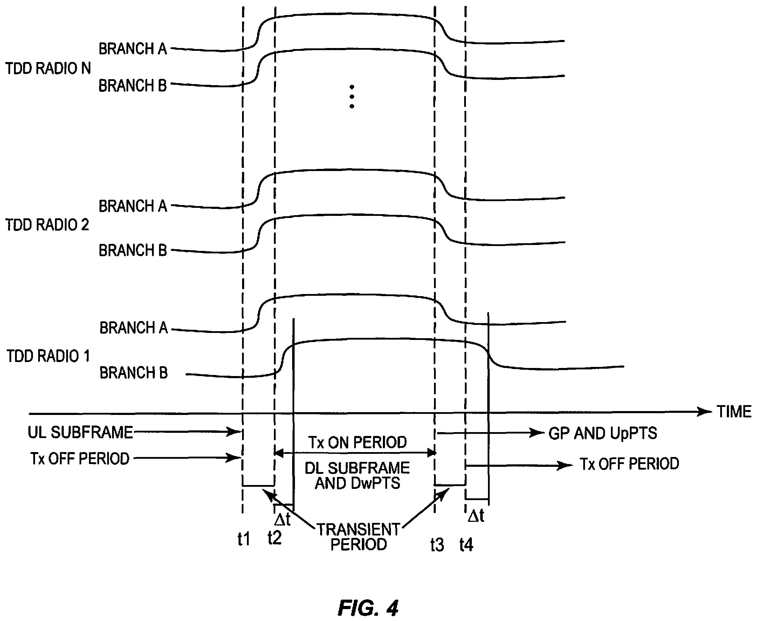

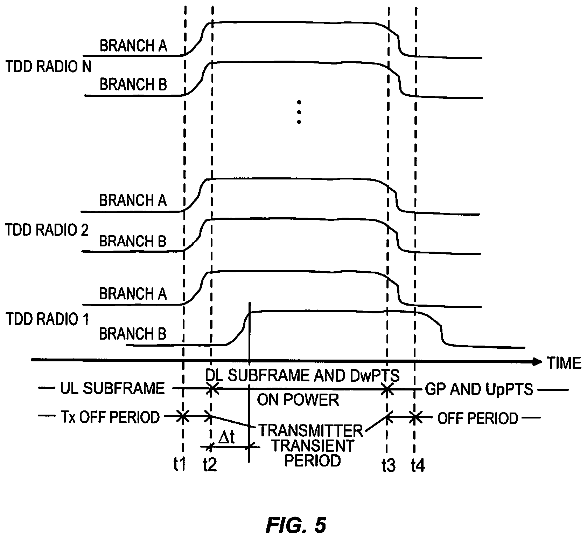

Figures 4 and 5 illustrate time misalignment between different TDD radio units, in both cases between branch B of TDD Radio 1 and remaining branches. These figures may be compared to Figure 3, in which transmissions from all branches are aligned. Figure 4 shows relatively smaller misalignment, while Figure 5 depicts a much larger misalignment between radios. In the illustrated examples, each radio unit has two transmit branches in each-these branches could be used for 4-antenna MIMO or even 4-antenna beamforming, for example.

Figure 4 illustrates TDD radios that have a relatively small misalignment of TDD switching due to a timing error in branch B of TDD Radio 1. Radio 1 branch B uplink receiving at time t2+Δt will be subjected to interference from transmitter transient power from radio 1 branch A. Radio 1 branch B may also be subjected to interference from the other radio units if the isolation between Radio 1 and the other radios is not so high. Furthermore, Radio 1 branch B transmitter transient power at time t4+Δt will interfere with the uplink reception of radio 1 branch A. Radio 1 branch B's transmitter transient power may even interfere with Radio 2 branches A and B, or with the other radios, if the isolation between Radio 1 and the other radios is not sufficiently large.

Figure 5 illustrates two TDD radios which have a relatively large misalignment of TDD switching, due to a timing error in Radio 1 branch B. In this case the misalignment is larger than the transmitter transient period. Uplink reception by Radio 1 branch B at time t2+Δt will be subject to interference from downlink transmission from Radio 1 branch A, and may be subject to interference from the other radios if the inter-radio isolation is not sufficiently large. Likewise, transmissions by Radio 1 branch B at time t4+Δt will interfere with uplink reception by radio 1 branch A, and may interfere with other radios if the isolation between Radio 1 and the other radios is not sufficiently large.

It can be seen that uplink reception at the TDD radio receivers will be interfered with if one or more radio branches has misaligned downlink/ uplink switching timing. As noted above, this in turn degrades uplink performance. When two or more TDD radios are co-located, the isolation between these radios can be low because of limited space, such as when radios are installed side-by-side or are installed in the same building top-floor. The antenna isolation between two adjacent radios might be as low as 25 dB in some scenarios, for example; thereby branch-to-branch isolation can only be 25 dB.

Thus, if one radio branch has misaligned TDD switching, e.g., as shown in Figures 4 and 5, the downlink transient power or even the primary downlink transmission power will cause interference to uplink reception at the other branches. The received uplink signal is often very weak and can be close to the noise floor. The demodulation of signals at low levels needs good design and good processing power to extract the relevant information from the noisy signal. This processing becomes more complex and demanding due to the noise generated by the misalignment of the switching.

In several embodiments of the present invention, this problem is addressed by compensating for the time misalignment of receive-transmit switching between the signals from antenna branches of the same radio transceiver or between antenna branches of different radio transceiver in a TDD radio node. As detailed below, this compensation may be selectively performed when the time misalignment exceeds a threshold level. Compensation for time alignment at the radio node (e.g., eNode B) is followed by adjustments of UE transmit and/or receive timing, to align with the adjusted timing of the TDD radio node.

More specifically, at a first switching occasion a TDD radio node switches between uplink time slot or subframe and downlink time slot or subframe in a radio unit or radio transceiver. The radio node determines the time misalignment of signal transmission between at least a first antenna in a radio transceiver and a reference timing at the first switching occasion. The reference timing may be a predetermined reference signal, in some cases, or the switching timing at one of the antennas. The TDD radio node then adjusts, by delaying the switching of signal transmission of the first antenna or one or more other antennas at a second switching occasion, provided the determined time misalignment is above a threshold. This adjustment is proportional to the determined time misalignment of the first antenna.

Subsepuently, a UE's signal reception and/or transmission timing is adjusted at a subframe after the second switching occasion, to track the adjustment at the radio node. This adjustment is proportional to the first adjustment. The adjustment of the UE signal reception and transmission timing can be facilitated by using an existing signaling mechanism, or it can be performed by informing the UE of the adjustment at the radio node, by using a new set of parameters and a new signaling mechanism.

As discussed above, the number of uplink and downlink subframes in a frame depends upon the TDD frame configurations. As described earlier, a downlink subframe comprises of a transmitter ON period and transient time(s), and an uplink subframe comprises of a receiver ON period and transient time(s). The TDD radio node switches the subframe from an uplink subframe to a downlink subframe or vice-versa at a pre-determined time or a reference time (T1), which is the end of a subframe. For example, consider that a certain LTE uplink subframe starts at time T0 and the subframe duration is 1 millisecond. Further assume that the transient time at the end of this subframe is Δτ1. Therefore, this uplink subframe is switched to a downlink subframe at a pre-determined time instance T1, where T1 = T0 + 1 ms - Δτ1. Typically, Δτ1 = 40 microseconds.

The corresponding downlink subframe starts at another pre-determined time or a reference time T2; where T2 = T0 + 1 ms. The downlink signal transmission in the downlink subframe takes place at T2 the event that there is no transient time at the start of the downlink subframe, or at time instance T3 = T2 + Δτ2, where Δτ2 is a transient time and is typically 40 microseconds. After the switching, the transmitter of a TDD radio transceiver is turned on and the TDD radio node transmits signals in the downlink.

In several embodiments of the present invention, the radio network node detects the signal transmission time, e.g., whether the uplink subframe is switched to the downlink subframe at one of the pre-determined or reference times. If the switching time is misaligned with the reference time then the radio node also determines the amount of misaligned time or duration (δτ1). The detection of the misalignment can be done by observing or measuring or detecting or sensing the start of the downlink signal transmission transmitted by an antenna at the radio network node. The misalignment occurs and is detected if the start of the downlink signal transmission is observed to be delayed by the duration (δτ1) compared to the reference time, for example.

The TDD radio transceiver may transmit signals using a single transmit antenna or multiple transmit antennas, depending upon the implementation of the radio network node and the transmission mode in use. In case of multiple antennas, the radio network node may determine the time misalignment of downlink signal transmission for the all antennas with respect to the reference time. In this case the radio network node may also determine the time misalignment of downlink signal transmissions between the antennas.

The radio network node may also contain more than one TDD radio transceiver. Further, each TDD radio transceiver may transmit signals using a single transmit antenna or multiple transmit antennas depending upon the implementation of the transceiver in the radio network node and/or the transmission mode. In case of multiple transceivers, the radio network node may determine the time misalignment of downlink signal transmission for the all antennas in all the transceivers with respect to the reference time. The radio network node may also determine the time misalignment of downlink signal transmissions between the antennas belonging to different transceivers.

The TDD radio node may also determine the time misalignment based on multiple measurements to improve the reliability of the results. For example it may observe or measure the time alignment in different subframes or time instances, and use suitable operations or function to obtain the final results for the time misalignment. Examples of the operations or functions that may be used to obtain a final characterization of a time misalignment include the mean, median, X-th percentile functions, or filtering operations.

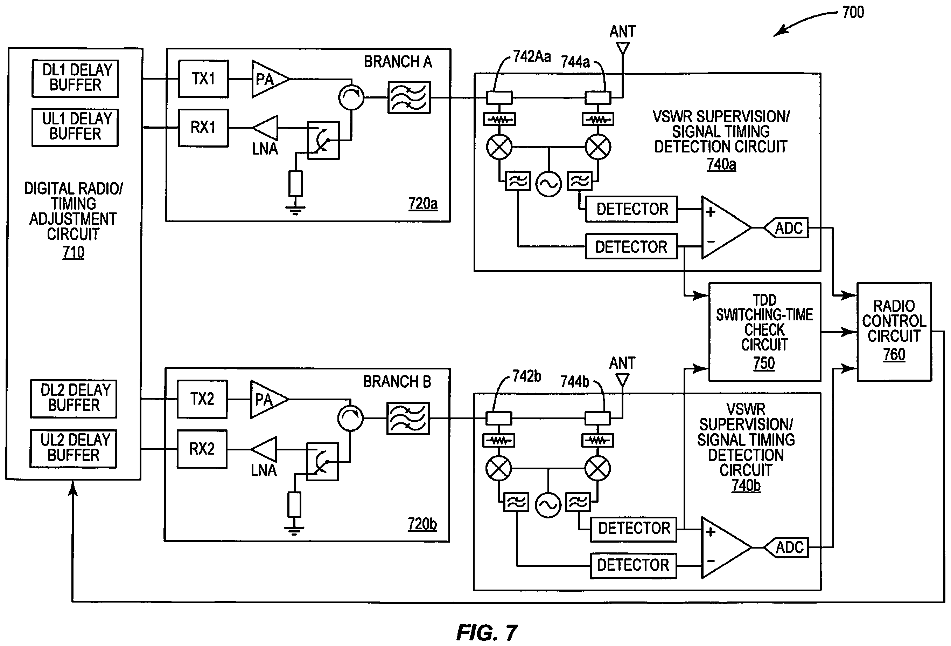

Figure 7 illustrates components of an example radio network node 700, according to some embodiments of the present invention. Radio network node 700, which has two branches, includes a Voltage-Standing-Wave-Ratio (VSWR) supervision circuit/transmission detection circuit 740 in each branch. A VSWR supervision circuit is used to detect signals that are reflected back towards the radio transmitter from the antenna, and can thus detect faults in the antenna system. In the illustrated radio network node 700, this circuit is further adapted to detect the outgoing transmitted signal. The detected signal from each branch is fed to a TDD switching-time check circuit 750, which compares the detected signals to a reference timing signal and/or to one another, to determine whether one of the signals is misaligned. It will be appreciated that a TDD switching-time check circuit can evaluate detected transmissions from more than two branches and/or from more than one TDD radio units. It should also be appreciated that various techniques for detecting the transmitted signal are possible. For example, an analog envelope detector might be used to convert a coupled portion of the transmitted signal to a baseband signal. Additional analog circuitry might be used to detect the leading edge of the detected envelope and/or to compare the detected envelopes from multiple branches to one another. Alternatively, a detected envelope might be converted to a digital signal, using an analog-to-digital (A/D) converter, in some embodiments, facilitating evaluation of the detected envelopes in a digital processor.

In the event that time misalignment for downlink transmission from one or more antennas is determined to be above a threshold (i.e. δτ1>α), then the TDD radio node adjusts the switching times of one or more antennas in a subframe at time instance T4, where T4 occurs after the determination of the time misalignment. The threshold (α) can be set to any of range of time interval; 20-50 microseconds is a good range for LTE TDD systems. The earliest possible time instance is the next switching occasion appearing after the determination of the time misalignment. The amount of adjustment is proportional to the determined time misalignment.

The adjustment is done to align the switching times of downlink signals transmission from all the antennas in the same transceiver. The adjustment need not be exact, but can be performed so that the resulting alignment falls within a predetermined margin (γ1). For example, the margin might be ± 5 microseconds in some systems. Note that the switching time adjustment may also be applied to antennas belonging to different transceivers. In this case the adjustment can also be with the same margin. Alternatively, a different margin might apply with respect to alignment between different transceivers. Note that it may be especially important to adjust the switching timing between antennas where the associated transceivers are not sufficiently isolated (e.g., signal isolation level is below 20 dB). This is because insufficient signal isolation may cause severe interference across the transceivers when switching times are misaligned.

The adjustment is typically done in a downlink subframe where the downlink transmission takes place during the ON duration of the transmitter. In one example of an architecture, each transmit antenna is associated with a buffer, which can store the data prior to transmission. The buffers are coordinated with a control unit to ensure that the data from misaligned antenna(s) is stored for an adequate time, i.e. over a pre-defined time period and/or until data from all antennas are available for transmission.

Thus, in some cases, the adjustment is realized by advancing or delaying the downlink signal transmission from the remaining antennas by the desired margin to ensure that all transmissions start at the same time. In other cases, however, it may be preferable to adjust the transmit timing for the antenna that is misaligned, e.g., by adding or subtracting delay from the transmit buffer for the misaligned transmission. In order to realize this objective, at the start of the downlink subframe the downlink signals are stored in a memory unit or a buffer over a time duration. Changes to the buffer duration are equal to or proportional to the adjustment time. The stored downlink signals are then transmitted by the radio network node after a delay that includes the adjustment duration (e.g. 60 µs). Of course, due to imperfections and practical limitations, the downlink signals may not be transmitted perfectly at the same time, but will instead be transmitted within a certain margin of one another.

A timing adjustment circuit in the radio node executes this operation. This timing adjustment circuit typically includes a controller executing software and/or firmware containing program instructions for carrying out the adjustments. In the example radio network node 700 of Figure 7, for example, TDD switching-time check circuit 750 determines whether an adjustment is needed, while radio control circuit 760, which comprises a controller running software, acts as the timing adjustment circuit, controlling delay buffers in digital radio 710 to implement the adjustments. Radio control circuit 760 may also collect statistics about the adjustment applied at different times. The applied adjustment may also cause the start of all the subsequent subframes to be delayed by the same amount of the adjustment. More specifically, after the adjustment of the downlink timing in a downlink subframes, the start of all types of subframes (e.g. downlink subframes, uplink subframes and special subframes) occurring after the adjustment will be delayed by the same amount. This is because the frame length is fixed, e.g. 10 milliseconds for LTE frame type 2.

The radio network node may apply a particular adjustment all at once (e.g., at the beginning of a single one of the subframes), or it may divide a needed adjustment across more than one adjustment occasions. The adjustment when applied over plurality of occasions may span over a certain pre-determined time period, e.g., over N subframes or M radio frames.

The radio network node may also restrict the application of adjustments to a specific subframe or a specific set of subframes. Examples of specific subframes are subframes occurring just before the subframes # 0 and # 5 in LTE. Subframes # 0 and # 5 in LTE carry several common control and common physical channels, which are used by the UE to attain synchronization, etc. Examples of such control and signals are synchronization signals (PSS and SSS), PBCH, SIB1, etc. Performing adjustments to downlink timing just before these subframes ensures that the UE will begin responding to the adjustments promptly.

Deliberate adjustment of the downlink timing at the radio network node to compensate the switching misalignment also requires adjustment of the UE timing. This is to ensure that the signal reception at the UE receiver is aligned with the downlink transmission timing and that the signal transmission at the UE transmitter is aligned with the uplink reception timing at the serving radio network node. Conventionally, the UE is required to follow changes in the downlink cell transmission timing, which may occur due to imperfections such as errors in the clocks, changes in radio propagation conditions, such as multipath, etc. Similarly, the UE uplink timing is adjusted by the UE based on the received TA command and autonomously by following the change in the downlink transmission change.

Accordingly, some UEs may automatically adjust their timings in response to adjustments in downlink timing, using these conventional techniques. The UE adjusts its reception timing by correlating the downlink reference signals (e.g. CRS, synchronization signals, etc.) and tracking changes in timing. Changes performed in this manner, however, are subject to the existing pre-defined slew rates in accordance with the detection in the change of the downlink timing.

In addition, the serving radio network node can use existing parameters, such as the timing advance command, to indicate to the UE how much the UE should adjust its uplink timing in a single transmission. The TA parameter is sent at specific time instance. For example it may be sent immediately after the radio network node downlink timing has been adjusted. Alternatively, it may be sent a certain number of subframes after the downlink timing has been adjusted at the radio network node. The network node may also send multiple TA commands to the UE in successive subframes, or over certain time period to adjust its uplink timing over that time period. The radio network node may send the TA command to multiple UEs at once.

When generating the TA command(s), the radio network node takes into account the downlink timing change performed to compensate the time misalignment. In this case, then, the TA command includes a timing adjustment which is due to a reason different than that used in previous TA implementations. As described earlier, TA is used in LTE to ensure that signals from multiple UEs arrive at the serving base station at the same time, or well within the cyclic prefix time. Even if the UE location does not change and/or the TA timer does not expire, the radio network node may still send a TA command to the UE to ensure that the UE uplink timing is adjusted according to changes in the downlink transmission timing. In accordance with the existing rules, a UE shall immediately apply a TA command and stop autonomous uplink timing adjustment in the event that the UE is autonomously adjusting its uplink timing to follow the downlink timing change when it receives the TA command.

In some cases, the deliberate adjustment of the downlink timing at the radio network node to compensate the switching misalignment can be very large, e.g., on the order of several tends of microseconds. This is a significant change in the cell timing over a short time period. With previously used mechanisms to follow the downlink cell timing, the UE may require a considerable amount of time to regain synchronization. Completing the adjustment may take several frames, for example, depending upon how may downlink subframes are available in a frame. If there are fewer downlink subframes (e.g., uplink-downlink configuration # 0) then it may take even longer. This may degrade performance or cause partial loss of data transmission between the radio node and the UE until the downlink re-synchronization is fully attained by the UE. The time to get downlink synchronization will also adversely affect the uplink transmission, since the UE derives uplink transmission timing based on downlink reception timing.

However, techniques for more efficiently adjusting the UE downlink reception and/or uplink reception timing may be used. These techniques are based on a new set of information provided to the UE by the radio network node. More particular, in some embodiments of the present invention, the radio network node serving the UE provides assistance information related to a change in the downlink cell transmission timing to the UE. This allows the UE to quickly re-synchronize to the new downlink cell timing. The information may be signaled to one UE at a time, or to multiple UEs served by the radio network node. The information may be signaled to a UE in connected state, as well as to UEs in idle state or in any other low activity state.

The assistance information can be signaled using a suitable protocol such as MAC, RRC, etc. Some of the parameters, if not included in the assistance information may be pre-defined (e.g., subframes where timing may change) as described further below. The assistance information related to the downlink cell timing change may include one or several parameters. For example, the serving radio network node may indicate to the UE that the downlink cell timing will be drifted or changed starting at a particular reference time (T5). The information may also indicate whether the downlink timing will be changed only in one subframe, or over multiple subframe (e.g., from T5 to T6). Examples of the reference time are a certain subframe in a frame having a particular system frame number (SFN), or a next specific subframe such as next downlink subframe # 0, the next downlink subframe, etc. In another example, the UE may be informed that the downlink cell timing will be changed over L consecutive downlink subframes starting from a reference time, T4. The parameter L can be signaled to the UE or pre-defined (e.g., L = 4 or 8). The specific subframes in which the downlink cell timing is allowed to be change or adjusted by the radio network node may also be pre-defined, e.g. subframe # 0, subframes # 5, etc. The network node may also inform the UE that the downlink timing will be shifted by a certain amount (e.g., 60 µs) at a reference time or over a certain time period starting from T5. The network node may also inform the UE of individual changes in the downlink cell timing at each adjustment instance, in the event that the total downlink timing is changed at multiple downlink subframes. For example, the assistance information might specify adjustments of 15 microseconds in each downlink subframe # 0, over the next four consecutive downlink subframes # 0.

The UE then uses the received information to adjust its downlink reception timing. This in turn assists the UE in quickly regaining the new downlink cell timing. For example, upon receiving the assistance information the receiver of the UE may adjust its reception timing according to the cell timing change as indicated in the received assistance information. To verify and to eventually synchronize to the new downlink cell transmission timing, the UE also performs correlation over a known reference signal (e.g. CRS, synchronization signals, etc.) in subframe(s) in which the downlink cell transmission timing is expected to be changed as indicated in the assistance information.

As described earlier, the UE adjusts its uplink transmission timing whenever there is a change in the downlink timing, using a slew rate of about 0.5 microseconds over 200 milliseconds. However this can be too slow an adjustment, given that the downlink cell transmission timing may have been adjusted by the radio network node, in one or a few downlink subframes, by 50-60 microseconds.

As noted earlier, the TA command is typically used for adjusting the UE transmit timing to compensate for propagation delay, to make sure that all UEs signals arrive well within a cyclic prefix interval at the radio network node receiver. In some embodiments, the radio network node may not use the existing TA command to manage adjustments of UE transmit timing. Instead, it may provide assistance information comprising a set of new parameters that enable the UE to rapidly adjust its uplink timing. Examples of the parameters which can be included in the signaled information are the amount of uplink timing adjustment, whether in one or multiple adjustments, the uplink subframes where to apply the uplink timing adjustments, a reference time or transmission period when to start applying the uplink timing adjustments, a validity or expiration time up to which the adjustment should be applied, etc. The information can be signaled to multiple UEs served by the radio network node. The information may be signaled to the UE in connected state as well as UEs in idle state or in any other low activity state. The information can be signaled using a suitable protocol such as MAC, RRC etc. The information can be signaled separately or combined with the downlink assistance information described earlier.

Upon receiving this information, the UE immediately adjusts its uplink timing in the indicated uplink subframes. It may also be pre-defined or indicated to the UE that the UE will adjust its uplink timing in a particular uplink subframe following the downlink subframes where the cell timing is changed. In addition the UE may also use the existing parameters and/or existing pre-defined rules to adjust its uplink timing for other purposes, such as the TA command.

It will be appreciated that not all radio network node and UEs in a given network will support timing adjustment capabilities such as those described above. For example, not all radio network nodes may be capable of adjusting its timing to compensate for or mitigate the effects of time misalignment at the subframe switching, using the techniques described above. Similarly, not all UEs may be capable of adjusting its timing based on new set of network assistance information to compensate for the timing adjustment in the radio network node as outlined above.

The lack of capability information, i.e., information indicating whether or not a particular radio node and/or a particular UE support the timing adjustment mechanisms will partially or fully prevent the network from executing the appropriate procedures related to timing adjustment to compensate for the switching misalignment in the radio network node. Accordingly, some embodiments of the present invention are configured to signal capability information to other nodes in the network.

For example, some embodiments are adapted to include radio network node timing adjustment capability signaling. In some of these embodiments, a radio network node signals its capability to other nodes, i.e., to other radio network nodes and/or other network nodes. For example, an eNode B may signal its capability that it can adjust its timing to compensate for receive-transmit switching misalignment to another eNode B, using the X2 interface.

The target node receiving the capability information may use this for one or more radio operational tasks. Examples of such radio operational tasks include decisions related to cell change of the UE, such as whether to handover a UE that can use only legacy timing adjustment mechanism. Other examples include decisions related to whether to perform timing adjustment around the same time as performed in the neighboring radio node.

The radio network node may send the capability information to another network node in any of several manners. One approach is proactive reporting, in which the radio network node sends the capability information without receiving an explicit request from another network node (e.g., a neighboring or any target network node). Another approach is to report capability information only upon receiving any explicit request from another network node. Combinations of these approaches may be used.

An explicit request can be sent to the radio network node by another network node any time, or at any specific occasion. For example, a request for capability reporting can be sent to the radio network node during initial setup, when the radio network node is upgraded (e.g., radio units or transceivers are added, the number of antennas in a radio unit are increased, new antennas modes are deployed, etc.).

Some UEs may also be adapted to transmit adjustment capability information. A UE which supports such capability may inform the network node that it is capable of adjusting its timing according to network assistance data or information. Typically the UE may report this capability to the serving network node (e.g., an RNC in HSPA or eNode B in LTE). However it may also report the capability to other nodes, such as a core network node, a positioning node, etc.

The reported capability may contain additional information. For instance, the capability information may include frequency band indicators, RATs, bandwidths, etc., for which the UE supports this capability. The capability information may also indicate whether UE can use network assistance data for doing uplink timing adjustment, downlink timing adjustment or both. The capability information may also indicate whether UE can perform the timing adjustment only at one occasion or over multiple occasions.

The acquired capability information may be used by the serving network node for one or more radio operation tasks or actions. Examples of radio operation tasks are decisions regarding whether to send assistance information to adjust the UE timing or to use legacy procedures, the information and parameters to be included in the assistance information, whether to use legacy timing adjustments in either or both the downlink or uplink, the number of occasions or time period over which the UE timing can be adjusted, etc.

The UE may send the capability information to the network node in any of several manners. First, the UE may perform proactive reporting, i.e., without receiving any explicit request from a network node. Alternatively, the UE may be adapted to report upon receiving any explicit request from a network node, whether a serving network node or a target network node.

An explicit request can be sent to the UE by the network at any time, or triggered by any of several specific events. For example, a request for capability reporting can be sent to the UE during initial setup or after a cell change (e.g., handover, RRC connection re-establishment, RRC connection release with redirection, DL and/or UL primary cell (PCell) change in a carrier aggregation scenario, a downlink and/or uplink primary component carrier (PCC) change in a carrier aggregation scenario etc.). Likewise, with respect to proactive reporting, the UE may report its capability during one or more of the following occasions: during initial setup or call setup, e.g., when establishing the RRC connection; during cell change, e.g., handover, primary component carrier change in multi-carrier operation, primary cell change in multi-carrier operation, RRC re-establishment, RRC connection release with redirection, etc.

In some systems, it may be useful to forward timing adjustment information to other network nodes for network management tasks. Thus, in some embodiments of the present invention, a radio network node adjusting the timing of the radio network node and the UE to compensate for the RX/TX switching misalignment at the radio network node may be configured to also forward information related to the timing adjustment to other network nodes. The information sent to other nodes may simply indicate that an adjustment has taken place, in some embodiments. However, the information may include additional information, such as the time instance (e.g., the subframe or subframes) in which the timing of the radio network node and/or of the UE has been adjusted, the amount of time by which the total timing has been adjusted in the radio node and/or in the UE, the amount of time by which the timing has been adjusted in the radio node and/or in the UE at each adjustment occasion (e.g., subframe). The information may also indicate the number of UEs whose timing has been adjusted, and/or the number of UEs whose timing has been adjusted by legacy mechanisms and by using the network assistance information.

The radio network node may send the information to other network nodes in real time or within a certain delay. The radio network node may also collect statistics over certain period of time and report the statistics to the other network nodes. Examples of other network nodes that may receive this information are neighboring base stations (e.g., one eNode B sends the information to one or more other eNode B's over an X2 interface), a positioning node (e.g., an Evolved Serving Mobile Location Center (E-SMLC) in LTE), a Minimization of Drive Testing (MDT) node, a Self-Optimizing Network (SON) node, an Operations & Management (O&M) node, an Operational Support Systems (OSS) node, a network monitoring node, a network planning node, etc. Any of this information may be sent by the radio network node adjusting its own timing and a UE's timing to the other network node either proactively or in response to an explicit request received from the target node.

The network node receiving any of the information described above may use it for one or more network management tasks. Examples of network management tasks are network/cell planning, configuration of network parameters, network dimensioning (e.g., deployment of number of nodes in a region, determining appropriate power class of radio nodes), deployment of antenna modes, determining whether or not to use beamforming, dimensioning of the number of antennas in a radio node and/or in a radio unit/transceiver, dimensioning of the number of radio units/transceivers in a radio network node, bandwidth allocation among different radio network nodes, selection of TDD configurations in different parts of the network, upgrading of network to accommodate typical number of users in different set of scenarios and/or radio environment, interference mitigation, management and control, etc.

A network node receiving any of the information described above may also use it to adjust the timing of one or more other TDD nodes and of the UEs under their control. For instance, the receiving network node may use the information received from the first TDD radio network node to request one or more second TDD radio nodes to also adjust their timing by the same amount as adjusted by the first TDD radio network node, which sent the information. The other radio node may also send such a request to a selected set of second TDD radio nodes. The selection criteria can be based on carrier frequency, frequency band, location, geographical or coverage area, type of radio node (e.g. power class of the radio node), etc. For example, in some cases only those TDD radio nodes operating on *the* same carrier as that of the first TDD node may be requested to adjust their timings. In another example, only those other TDD radio nodes operating on the same carrier as or on a carrier adjacent to that of the first TDD node may be requested to adjust their timings.

The adjustment of timing at the second TDD radio node is done to make sure that the frame and subframe start timings of all the neighboring TDD nodes or TDD nodes in the same coverage or geographical area are aligned within a certain margin. A typical target margin may be about 3 microseconds. If the network node that receives the adjustment information from the first node is itself a TDD radio node (e.g., an eNode B) then it may adjust its timing by the same amount as performed by the TDD radio network node that sent the information.

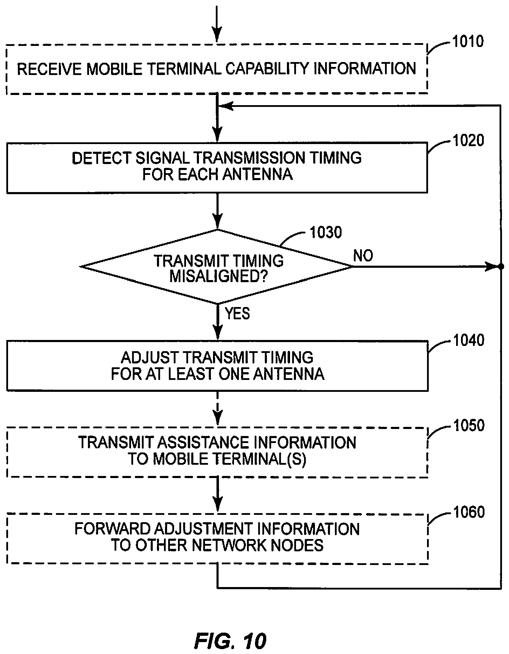

Figure 10 illustrates an example method for controlling uplink and downlink timing, bringing together several of the techniques described above. This method is suitable for implementation by an appropriately configured radio network node, for example. In particular, this method may be carried out by a LTE eNodeB configured for TDD operation. However, the techniques illustrated in Figure 10 are not limited to the LTE TDD context.

As seen at block 1010 of Figure 10, the illustrated process begins with the receiving of mobile terminal capability information for one or more mobile terminals, the capability information indicating that mobile terminal(s) can use assistance information to account for the adjustment of downlink timing. Some embodiments may be configured to do without this information, so this step may be regarded as optional, as indicated by the dashed line surrounding block 1010. Next, as shown at block 1020, the radio network node detects signal transmission timing for each of two or more antennas associated with the radio network node, for at least a first transmission period. This detecting may be performed at least at one of the following occasions, in some embodiments: when switching between uplink and downlink subframes in a TDD frame; when transmission power changes within the first transmission period; and when transmission power changes between OFDMA symbols within the first transmission period. It will be appreciated that downlink transmission power can be kept constant within a subframe and over several consecutive subframes, but it can also be changed every subframe in LTE. In principle it can also be changed within a subframe. Typically, transmission power is adjusted in every downlink subframe, since UE is typically scheduled on subframe basis. The transmission power depends upon factors such as the amount of data, modulation and coding scheme (MCS) or the transport format of the data transmitted to the UE in a subframe.

The first transmission period for which the signal transmission timing is detected may be one of: a radio frame; a subframe; a time slot; a transmission time interval(TTI); an OFDMA symbol; a special subframe in a Long-Term Evolution, LTE, TDD system; and a DwPTS field in an LTE TDD subframe. Other examples are possible. In some embodiments, the first transmission period is a radio frame designated by a pre-defined system frame number, or a portion of a radio frame designated by a pre-defined system frame number (SFN).

Next, as shown at block 1030, the radio network node determines that transmit timing for at least one of the antennas is misaligned by at least a first threshold time interval, based on the detected signal transmission timings. In some systems, this comprises comparing one or more of the detected signal transmission timings to a reference time. In some cases, this reference time may be an external reference, such as a timing reference from a GPS receiver. In other cases, however, the reference time is the detected signal transmission timing for one of the antennas, so that the system is comparing one or more of the detected signal transmission timings to the transmission timing for one of the antennas, i.e., a reference antenna.

In some embodiments, determining that transmit timing for at least one of the antennas is misaligned is based on detected signal transmission timings corresponding to multiple transmission periods, for each of the two or more antennas. Timings from the multiple transmission periods may be averaged, for example, to smooth the timing measurements. Other statistical or numerical techniques may be applied, of course.

As shown at block 1040, the illustrated process continues with the adjustment of transmit timing for at least one of the antennas for one or more subsequent transmission periods, responsive to determining that the transmission timing for at least one of the antennas is misaligned. In some cases, the adjustment may comprise adjusting transmit timing for the at least one antenna that is misaligned. In other cases, however, the radio network node may adjust the transmit timing for one or more antennas other than the antenna that is misaligned. For instance, if the misaligned transmission timing is delayed with respect to all other branches, it may be advantageous in some systems or in some scenarios to add delay to all of the other transmitter chains, rather than to advance the misaligned transmission.

In many embodiments, the adjustment of transmit timing is performed by adjusting a downlink transmit buffer duration. In some embodiments, the adjustment may be achieved by performing two or more successive adjustments at two or more corresponding transmission periods. In some cases, the radio network node may selectively decide to divide the necessary adjustment into two or more adjustments, performed at separate transmission periods, responsive to determining that the transmit timing for at least one of the antennas is misaligned by at least a second threshold time interval, greater than the first threshold time interval.

In some embodiments, adjustments of transmit timing are restricted to a predetermined subset of transmission periods. This predetermined subset of transmission periods may consist of transmission periods immediately prior to transmission periods used for the transmission of synchronization signals, for example. Alternatively, the adjustments may be restricted to transmission periods that contain a pre-defined signal, such as a synchronization signal, in some embodiments.

As shown at block 1050, the adjustment of downlink transmit timing by the radio network node may be accompanied by or followed by the transmission of assistance information to one or more mobile terminals, to assist the mobile terminal in adjustment downlink reception timing and/or uplink transmission timing. This is not necessarily done in all embodiments, however. When it is, the assistance information indicates that an adjustment to downlink transmission timing for at least one antenna is to occur or has occurred. In some embodiments, the assistance information specifies at least one of: an amount of adjustment; a timing for the adjustment of downlink timing; at least one antenna for which downlink timing is misaligned with a first threshold time interval; and at least one antenna for which downlink timing adjustment is to occur or has occurred. In some cases, the timing for the adjustment of downlink timing is specified in terms of a system frame number. It should be appreciated that the transmitting of assistance information may be in response to receiving capability information from one or more mobile terminals, as shown at block 1010.

Finally, as shown at block 1060, some implementations of the illustrated process may further include the forwarding of information characterizing the transmit timing adjustment, or capability information for at least one mobile terminal, indicating that the mobile terminal can use assistance information to account for downlink timing adjusting, or both, to one or more fixed network nodes. This information can be used by the receiving node for any of several operational tasks, as discussed in detail earlier.

Figure 7 illustrates features of an example radio network node 700, according to several embodiments of the present invention. Radio network node 700, which has two branches, denoted "A" and "B," comprises transceivers 720a and 720b, which are both driven by digital radio unit 710. Digital radio/timing adjustment circuit 710 processes the signals transmitted and received by the transceivers 720a and 720b.

Transceivers 720a and 720b are coupled to their respective antennas through Voltage-Standing Wave Ratio (VSWR) supervision and signal detection circuits 740a and 740b. More specifically, the output from transceivers 720a and 720b are coupled to their respective antennas through directional couplers 742a, 744a, 742b, and 744b. Couplers 742a and 742b sample the forward-going transmitted signals as they pass from transceivers 720a and 720b towards the antennas. Couplers 744a and 744b sample the reflected signals from the antennas as those reflected signals head back towards the transceivers. These sampled signals are downconverted to baseband and detected, so that the forward-going and reflected signals can be compared. In this manner, radio control circuit 760 can monitor the reflected signals from the antennas and determine whether there is a fault. Extreme problems with reflection (characterized by a high VSWR) may require that the transceiver be shut down to avoid damaging the power amplifier or other components.

In the illustrated radio network node 700, VSWR supervision/signal detection circuits 740a and 740b have been adapted to provide a transmitted signal detection function. In each unit, the downconverted sample of the forward-going transmitter signal, after detection, is supplied to a TDD switching-time check circuit 750. The TDD switching-time check circuit 750 comprises a circuit configured to determine the timing of the forward-going transmitter signals, e.g., by detecting the leading edge of the detected transmitter waveforms. TDD switching-time check circuit 750 is further configured to compare the timing of the transmitter signals to a reference time, to determine whether the signals are misaligned. It will be appreciated that several techniques for detecting waveform timing and comparing timings for two or more waveforms are possible. In some cases, the detected waveforms are digitized and the timing and comparison operations are performed digitally. In other cases, one or both of the waveform timing detection and timing comparisons may be performed using analog circuitry, with the results of the comparison being digitized to characterize the magnitude of any misalignment. Measured misalignments are supplied to radio control circuit 760 for use in making any necessary adjustments.

As discussed earlier, the reference time used by TDD switching-time check circuit 750 may be derived from an externally supplied reference signal, such as a GPS time reference. Alternatively, the reference time used for this comparison may be the timing for one of the antenna branches that is being monitored. In this latter case, one of the antenna branches serves as a reference branch, and the timing of signals transmitted from other branches is compared to the reference branch to detect any misalignment.

Any needed adjustments of the transmitter timings are performed by digital radio/timing adjustment circuit 710, under the control of radio control circuit 760. Digital radio/timing adjustment circuit 710, which may include one or more processors, memory, and appropriate program code, as well as special-purpose digital logic is configured to use known radio processing and signal processing techniques, e.g., according to a particular telecommunications standard such as the 3GPP standards for LTE and/or LTE-Advanced. Because the various details and engineering tradeoffs associated with the design and implementation of such circuitry are well known and are unnecessary to a full understanding of the invention, additional details of that circuitry and those processing techniques are not detailed here. Digital radio/timing adjustment circuit 710 further includes, however, uplink and downlink delay buffers, which may be used to control and adjust timing of receive-transmit timing for each branch.

Radio control circuit 760 comprises one or more processors, hardware, firmware or a combination thereof, coupled to one or more memory devices that make up a data storage memory and a program storage memory. The memory may comprise one or several types of memory such as read-only memory (ROM), random-access memory, cache memory, flash memory devices, optical storage devices, etc. Again, because the various details and engineering tradeoffs associated with the design of control circuitry for radio network nodes are well known and are unnecessary to a full understanding of the invention, additional details are not shown here. Radio control circuit 760 may be entirely separate from digital radio/timing adjustment circuit 750, or may share one or more processors, memory, etc.

In several embodiments of the present invention, the radio control circuit 760 is adapted, using suitable program code stored in program storage memory, for example, to carry out one of the techniques described above for controlling downlink and uplink timing, in cooperation with VSWR supervision/signal detection circuits 740 and TDD switching-time check circuit 750. Of course, it will be appreciated that not all of the steps of these techniques are necessarily performed in a single microprocessor or even in a single module. It should be further appreciated that the VSWR supervision aspects of VSWR supervision/signal detection circuits are not essential to the timing control operations described herein. Instead, the configuration illustrated in Figure 7 is but one convenient way to implement the inventive techniques described herein; those skilled in the art will appreciate that a variety of physical implementations are possible.

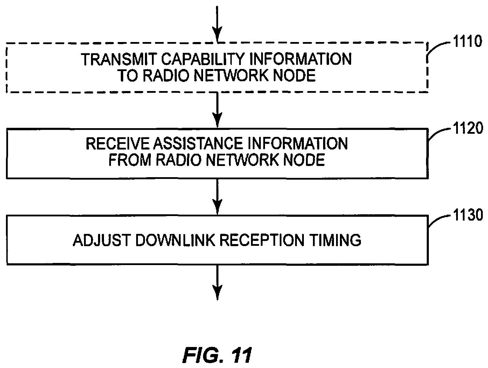

Figure 11 illustrates an example method for adjusting downlink reception timing in a mobile terminal, again bringing together several of the techniques described above. This method is suitable for implementation by an appropriately configured LTE UE operating in TDD mode, for example. Once again, however, the techniques illustrated in Figure 11 are not limited to the LTE TDD context.

The method illustrated in Figure 11 begins, like the method of Figure 10, with an optional step, i.e., an operation that is not necessarily carried out in all embodiments. As shown at block 1110, this optional operation is the sending of capability information to the radio network node, the capability information indicating that the mobile terminal can use assistance information to account for the adjustment of downlink timing. As discussed earlier, this capability information can be used by the radio network node to determine whether and how to send assistance information to the mobile terminal.

The illustrated method continues, as shown at block 1120, with receiving assistance information from a radio network node, the assistance information indicating that an adjustment of downlink timing is to occur or has occurred. In some embodiments, the assistance information specifies at least one of an amount of adjustment; a timing for the adjustment of downlink timing; at least one antenna for which downlink timing is misaligned with a first threshold time interval; and at least one antenna for which downlink timing adjustment is to occur. In some embodiments, the timing for the adjustment of downlink timing is specified in terms of a system frame number.

As shown at block 1130, the method continues with the adjusting of at least downlink reception timing based on the assistance information. It will be appreciated that slew rate limitations may be disregarded, in some embodiments, when assistance information indicating a large adjustment in downlink timing is received.

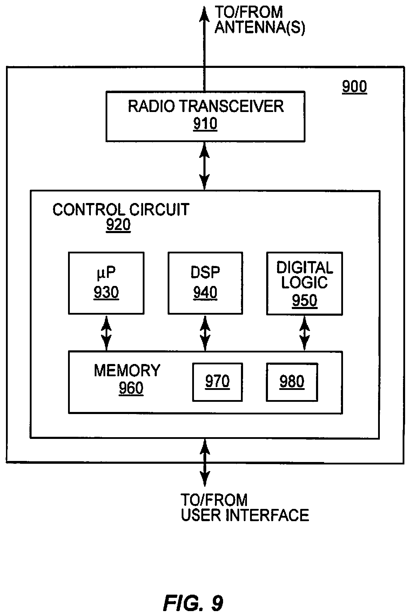

Figure 9 illustrates features of an example mobile terminal 900, according to several embodiments of the present invention. Mobile terminal 900 may be an LTE UE, in some embodiments. Mobile terminal 900 includes a radio transceiver 910 and a control circuit 920. Each of these circuits is configured, using known components and techniques, to carry out communication to and from a radio network node, typically according to a telecommunications standard such as the 3GPP standards for LTE and/or LTE-Advanced. Control circuit 920 is further configured to receive user input from and provide output to a user interface (not shown), which may include, for example, one or more displays, speakers, microphones, keypads, etc.

More particularly, control circuit 920 comprises one or more processors 930, digital signal processors 940, digital logic 950, firmware, or a combination thereof, coupled to one or more memory devices 960 that make up a data storage memory 970 and a program storage memory 980. The memory 960 may comprise one or several types of memory such as read-only memory (ROM), random-access memory, cache memory, flash memory devices, optical storage devices, etc. Again, because the various details and engineering tradeoffs associated with the design of control circuitry for mobile terminals are well known and are unnecessary to a full understanding of the invention, additional details are not shown here.

In several embodiments of the present invention, control circuit 920 is adapted, using suitable program code stored in program storage memory 980, for example, to carry out one of the techniques described above for adjusting downlink reception timing. Accordingly, in several embodiments control circuit 920 is configured to receive assistance information from a radio network node, via the radio transceiver 910, the assistance information indicating that an adjustment of downlink timing is to occur or has occurred. The control circuit 920 in these embodiments is further configured to adjust downlink reception timing based on the assistance information. In some embodiments, the assistance information specifies at least one of: an amount of adjustment; a timing for the adjustment of downlink timing; at least one antenna for which downlink timing is misaligned with a first threshold time interval; and at least one antenna for which downlink timing adjustment is to occur. In some cases, the timing for the adjustment of downlink timing is specified in terms of a system frame number. In several embodiments, the control circuit 920 is further configured to first send capability information to the radio network node, via the radio transceiver 910, the capability information indicating that the mobile terminal 900 can use assistance information to account for the adjustment of downlink timing. Of course, it will be appreciated that not all of the steps of these techniques are necessarily performed in a single microprocessor or even in a single module.

It will be appreciated by the person of skill in the art that various modifications may be made to the above described embodiments without departing from the scope of the present invention. For example, it will be readily appreciated that although the above embodiments are described with reference to parts of a 3GPP network, embodiments of the present invention will also be applicable to like networks, such as a successor of the 3GPP network, having like functional components. Therefore, in particular, the terms 3GPP and associated or related terms used in the above description and in the enclosed drawings and any appended claims now or in the future are to be interpreted accordingly.

Examples of several embodiments of the present invention have been described in detail above, with reference to the attached illustrations of specific embodiments. Because it is not possible, of course, to describe every conceivable combination of components or techniques, those skilled in the art will appreciate that the present invention can be implemented in other ways than those specifically set forth herein, without departing from essential characteristics of the invention. The present embodiments are thus to be considered in all respects as illustrative and not restrictive.

## Claims

1. A method, in a radio network node, for controlling downlink transmission timing, **characterized in that** the method comprises:
detecting (1020) a signal transmission timing for each of two or more antennas associated with the radio network node, for at least a first transmission period;
determining (1030) that transmit timing for at least one of the antennas is misaligned by at least a first threshold time interval, based on the detected signal transmission timings;
adjusting (1040) transmit timing for at least one of the antennas for one or more subsequent transmission periods, responsive to said determining; and
transmitting (1050) assistance information to one or more mobile terminals, the assistance information indicating that an adjustment of downlink timing is to occur or has occurred.

2. The method of claim 1, wherein adjusting (1040) transmit timing for at least one of the antennas comprises adjusting transmit timing for the at least one antenna that is misaligned.

3. The method of any of claims 1-2, wherein adjusting (1040) transmit timing for at least one of the antennas comprising adjusting transmit timing for one or more antennas other than the at least one antenna that is misaligned.

4. The method of any of claims 1-3, wherein adjusting (1040) transmit timing for at least one of the antennas comprises adjusting a downlink transmit buffer duration.

5. A radio network node (700), **characterized by** comprising:
a signal timing detection circuit (740) configured to detect a signal transmission timing for each of two or more antennas associated with the radio network node, for at least a first transmission period;
a switching-time check circuit (750) coupled to the signal timing detection circuit (740) and configured to determine that transmit timing for at least one of the antennas is misaligned by at least a first threshold time interval, based on the detected signal transmission timings; and
a timing adjustment circuit (710) coupled to the switching-time check circuit (750) and configured to adjust transmission timing for at least one of the antennas for one or more subsequent transmission periods, responsive to the determination by the switching-time check circuit (750) that the transmit timing for at least one of the antennas is misaligned by at least the first threshold time interval; and a transmitter control circuit configured to transmit assistance information to one or more mobile terminals, the assistance information indicating that an adjustment of downlink timing is to occur or has occurred.

6. The radio network node (700) of claim 5, wherein the timing adjustment circuit (710) is configured to adjust transmit timing for at least one of the antennas by adjusting transmit timing for the at least one antenna that is misaligned.

7. The radio network node (700) of any of claims 5-6, wherein the timing adjustment circuit (710) is configured to adjust transmit timing for at least one of the antennas by adjusting transmit timing for one or more antennas other than the at least one antenna that is misaligned.

8. The radio network node (700) of any of claims 5-7, wherein the timing adjustment circuit (710) is configured to adjust transmit timing for at least one of the antennas by adjusting a downlink transmit buffer duration.

9. A method, in a mobile terminal, for adjusting downlink reception timing, uplink transmission timing, or both, **characterized in that** the method comprises:
receiving (1120) assistance information from a radio network node, the assistance information indicating that an adjustment of downlink transmission timing for at least one antenna of the radio network node is to occur or has occurred at the radio network node; and
adjusting (1130) downlink reception timing, uplink transmission timing, or both, based on the assistance information to align with the downlink timing of the radio network node.

10. The method of claim 9, wherein the assistance information specifies at least one of an amount of adjustment; a timing for the adjustment of downlink timing; at least one antenna for which downlink timing is misaligned with a first threshold time interval; and at least one antenna for which downlink timing adjustment is to occur.

11. The method of any of claims 9-10, further comprising first sending (1110) capability information to the radio network node, the capability information indicating that the mobile terminal can use assistance information to account for the adjustment of downlink timing.

12. A mobile terminal (900), comprising a radio transceiver (910) and a control circuit (920), **characterized in that** the control circuit (920) is configured to:
receive assistance information from a radio network node, via the radio transceiver (910), the assistance information indicating that an adjustment of downlink transmission timing for at least one antenna of the radio network node is to occur or has occurred at the network node; and
adjust downlink reception timing, uplink transmission timing, or both, based on the assistance information to align with the downlink timing of the radio network node.

13. The mobile terminal (900) of claim 12, wherein the assistance information specifies at least one of: an amount of adjustment; a timing for the adjustment of downlink timing; at least one antenna for which downlink timing is misaligned with a first threshold time interval; and at least one antenna for which downlink timing adjustment is to occur.

14. The mobile terminal (900) of claim 13, wherein the timing for the adjustment of downlink timing is specified in terms of a system frame number.

15. The mobile terminal (900) of any of claims 12-14, wherein the control circuit (920) is further configured to first send capability information to the radio network node, via the radio transceiver (910), the capability information indicating that the mobile terminal (900) can use assistance information to account for the adjustment of downlink timing.

## Patentansprüche

1. Verfahren, in einem Funknetzknoten, zum Steuern des Abwärtsstreckenübertragungstakts, **dadurch gekennzeichnet, dass** das Verfahren Folgendes umfasst:
Detektieren (1020) eines Signalübertragungstakts für jede von zwei oder mehreren mit dem Funknetzknoten assoziierten Antennen für mindestens eine erste Übertragungsperiode;
Bestimmen (1030), basierend auf den detektierten Signalübertragungstakten, dass der Übertragungstakt für mindestens eine der Antennen um mindestens ein erstes Schwellenzeitintervall verstimmt ist;
Anpassen (1040), reagierend auf das Bestimmen, des Übertragungstakts für mindestens eine der Antennen für eine oder mehrere nachfolgende Übertragungsperioden; und
Übertragen (1050) von Unterstützungsinformationen an ein oder mehrere mobile Endgeräte, wobei die Unterstützungsinformationen angeben, dass eine Anpassung des Abwärtsstreckentakts auftreten wird oder aufgetreten ist.

2. Verfahren nach Anspruch 1, wobei das Anpassen (1040) des Übertragungstakts für mindestens eine der Antennen das Anpassen des Übertragungstakts für mindestens eine Antenne umfasst, die verstimmt ist.

3. Verfahren nach einem der Ansprüche 1-2, wobei das Anpassen (1040) des Übertragungstakts für mindestens eine der Antennen das Anpassen des Übertragungstakts für mindestens eine oder mehrere Antennen umfasst, die sich von der mindestens einen Antenne unterscheiden, die verstimmt ist.

4. Verfahren nach einem der Ansprüche 1-3, wobei das Anpassen (1040) des Übertragungstakts für mindestens eine der Antennen das Anpassen einer Abwärtsstreckenübertragungspufferdauer umfasst.

5. Funknetzknoten (700), **dadurch gekennzeichnet, dass** er Folgendes umfasst:
eine Signaltaktdetektionsschaltung (740) die konfiguriert ist, um einen Signalübertragungstakt für jede von zwei oder mehreren mit dem Funknetzknoten assoziierten Antennen für mindestens eine erste Übertragungsperiode zu detektieren;
eine Schaltzeitprüfschaltung (750), die mit der Signaltaktdetektionsschaltung (740) gekoppelt ist und konfiguriert ist, um basierend auf den detektierten Signalübertragungstakten zu bestimmen, dass der Übertragungstakt für mindestens eine der Antennen um mindestens ein erstes Schwellenzeitintervall verstimmt ist; und
eine Taktanpassungsschaltung (710), die mit der Schaltzeitprüfschaltung (750) gekoppelt ist und konfiguriert ist, um den Übertragungstakt für mindestens eine der Antennen für eine oder mehrere nachfolgende Übertragungsperioden reagierend auf die Bestimmung durch die Schaltzeitprüfschaltung (750), dass der Übertragungstakt für mindestens eine der Antennen um mindestens das erste Schwellenzeitintervall verstimmt ist, anzupassen;
eine Sendersteuerungsschaltung, die konfiguriert ist, um Unterstützungsinformationen an ein oder mehrere mobile Endgeräte zu übertragen, wobei die Unterstützungsinformationen angeben, dass eine Anpassung des Abwärtsstreckentakts auftreten wird oder aufgetreten ist.

6. Funknetzknoten (700) nach Anspruch 5, wobei die Taktanpassungsschaltung (710) konfiguriert ist, um den Übertragungstakt für mindestens eine der Antennen durch Anpassen des Übertragungstakts für mindestens eine der Antennen anzupassen, die verstimmt ist.

7. Funknetzknoten (700) nach einem der Ansprüche 5-6, wobei die Taktanpassungsschaltung (710) konfiguriert ist, um den Übertragungstakt für mindestens eine der Antennen durch Anpassen des Übertragungstakts für eine oder mehrere Antennen anzupassen, die sich von der mindestens einen Antenne unterscheiden, die verstimmt ist.

8. Funknetzknoten (700) nach einem der Ansprüche 5-7, wobei die Taktanpassungsschaltung (710) konfiguriert ist, um den Übertragungstakt für mindestens eine der Antennen durch Anpassen einer Abwärtsstreckenübertragungspufferdauer anzupassen.

9. Verfahren, in einem mobilen Endgerät, zum Anpassen des Abwärtsstreckenempfangstakts, Aufwärtsstreckenübertragungstakts, oder beiden, **dadurch gekennzeichnet, dass** das Verfahren Folgendes umfasst:
Empfangen (1120) von Unterstützungsinformationen von einem Funknetzknoten, wobei die Unterstützungsinformationen angeben, dass eine Anpassung des Abwärtsstreckentakts für mindestens eine Antenne des Funknetzknotens am Funknetzknoten auftreten wird oder aufgetreten ist; und
Anpassen (1130) des Abwärtsstreckenempfangstakts, Aufwärtsstreckenübertragungstakts, oder beiden, basierend auf den Unterstützungsinformationen, zum Abstimmen auf den Abwärtsstreckentakt des Funknetzknotens.

10. Verfahren nach Anspruch 9, wobei die Unterstützungsinformationen mindestens eines von einem Betrag der Anpassung; einem Takt für die Anpassung des Abwärtsstreckentakts; mindestens einer Antenne, für die der Abwärtsstreckentakt um einen ersten Schwellenzeitintervall verstimmt ist; und mindestens einer Antenne, für die Abwärtsstreckentaktanpassung auftreten wird, spezifizieren.

11. Verfahren nach einem der Ansprüche 9-10, das ferner zuerst das Senden (1110) von Fähigkeitsinformationen an den Funknetzknoten umfasst, wobei die Fähigkeitsinformationen angeben, dass das mobile Endgerät Unterstützungsinformationen verwenden kann, um der Anpassung des Abwärtsstreckentakts Rechnung zu tragen.

12. Mobiles Endgerät (900), das einen Funksender/-empfänger (910) und eine Steuerungsschaltung (920) umfasst, **dadurch gekennzeichnet, dass** die Steuerungsschaltung (920) konfiguriert ist, um:
Unterstützungsinformationen von einem Funknetz, über einen Funksender/-empfänger (910), zu empfangen, wobei die Unterstützungsinformationen angeben, dass eine Anpassung des Abwärtsstreckentakts für mindestens eine Antenne des Funknetzknotens am Netzknoten auftreten wird oder aufgetreten ist; und
Abwärtsstreckenempfangstakt, Aufwärtsstreckenübertragungstakt, oder beide, basierend auf den Unterstützungsinformationen, zum Abstimmen auf den Abwärtsstreckentakt des Funknetzknotens anzupassen.

13. Mobiles Endgerät (900) nach Anspruch 12, wobei die Unterstützungsinformationen mindestens eines von einem Betrag der Anpassung; einem Takt für die Anpassung des Abwärtsstreckentakts; mindestens einer Antenne, für die der Abwärtsstreckentakt um einen ersten Schwellenzeitintervall verstimmt ist; und mindestens einer Antenne, für die Abwärtsstreckentaktanpassung auftreten wird, spezifizieren.

14. Mobiles Endgerät (900) nach Anspruch 13, wobei der Takt zur Anpassung des Abwärtsstreckentakts im Hinblick auf eine Systemrahmennummer spezifiziert wird.

15. Mobiles Endgerät (900) nach einem der Ansprüche 12-14, wobei die Steuerungschaltung (920) ferner konfiguriert ist, um, über den Funksender/-empfänger (910), zuerst Fähigkeitsinformationen an den Funknetzknoten zu senden, wobei die Fähigkeitsinformationen angeben, dass das mobile Endgerät (900) Unterstützungsinformationen verwenden kann, um der Anpassung des Abwärtsstreckentakts Rechnung zu tragen.

## Revendications

1. Procédé, mis en oeuvre dans un noeud de réseau radio, de commande de synchronisation de transmission en liaison descendante, **caractérisé en ce que** le procédé comprend les étapes ci-dessous consistant à :
détecter (1020) une synchronisation de transmission de signaux pour chacune parmi deux antennes ou plus associées au noeud de réseau radio, pour au moins une première période de transmission ;
déterminer (1030) qu'une synchronisation de transmission pour au moins l'une des antennes est désalignée d'au moins un premier intervalle de temps de seuil, sur la base des synchronisations de transmission de signaux détectées ;
ajuster (1040) la synchronisation de transmission, pour au moins l'une des antennes, pour une ou plusieurs périodes de transmission subséquentes, en réponse à ladite étape de détermination ; et
transmettre (1050) des informations d'assistance à un ou plusieurs terminaux mobiles, les informations d'assistance indiquant qu'un ajustement de synchronisation de liaison descendante doit se produire ou s'est produit.

2. Procédé selon la revendication 1, dans lequel l'étape d'ajustement (1040) de la synchronisation de transmission pour au moins l'une des antennes consiste à ajuster la synchronisation de transmission pour ladite au moins une antenne qui est désalignée.

3. Procédé selon l'une quelconque des revendications 1 à 2, dans lequel l'étape d'ajustement (1040) de la synchronisation de transmission pour au moins l'une des antennes consiste à ajuster la synchronisation de transmission pour une ou plusieurs antennes distinctes de ladite au moins une antenne qui est désalignée.

4. Procédé selon l'une quelconque des revendications 1 à 3, dans lequel l'étape d'ajustement (1040) de la synchronisation de transmission pour au moins l'une des antennes consiste à ajuster une durée de tampon de transmission en liaison descendante.

5. Noeud de réseau radio (700), **caractérisé en ce qu'**il comporte :
un circuit de détection de synchronisation de signaux (740) configuré de manière à détecter une synchronisation de transmission de signaux pour chacune parmi deux antennes ou plus associées au noeud de réseau radio, pour au moins une première période de transmission ;
un circuit de contrôle de temps de commutation (750) couplé au circuit de détection de synchronisation de signaux (740) et configuré de manière à déterminer qu'une synchronisation de transmission pour au moins l'une des antennes est désalignée d'au moins un premier intervalle de temps de seuil, sur la base des synchronisations de transmission de signaux détectées ; et
un circuit d'ajustement de synchronisation (710) couplé au circuit de contrôle de temps de commutation (750), et configuré de manière à ajuster la synchronisation de transmission pour au moins l'une des antennes, pour une ou plusieurs périodes de transmission subséquentes, en réponse à la détermination, par le circuit de contrôle de temps de commutation (750), selon laquelle la synchronisation de transmission pour au moins l'une des antennes est désalignée d'au moins le premier intervalle de temps de seuil ; et
un circuit de commande d'émetteur configuré de manière à transmettre des informations d'assistance à un ou plusieurs terminaux mobiles, les informations d'assistance indiquant qu'un ajustement de synchronisation de liaison descendante doit se produire ou s'est produit.

6. Noeud de réseau radio (700) selon la revendication 5, dans lequel le circuit d'ajustement de synchronisation (710) est configuré de manière à ajuster la synchronisation de transmission pour au moins l'une des antennes en ajustant la synchronisation de transmission pour ladite au moins une antenne qui est désalignée.

7. Noeud de réseau radio (700) selon l'une quelconque des revendications 5 à 6, dans lequel le circuit d'ajustement de synchronisation (710) est configuré de manière à ajuster la synchronisation de transmission pour au moins l'une des antennes, en ajustant la synchronisation de transmission pour une ou plusieurs antennes distinctes de ladite au moins une antenne qui est désalignée.

8. Noeud de réseau radio (700) selon l'une quelconque des revendications 5 à 7, dans lequel le circuit d'ajustement de synchronisation (710) est configuré de manière à ajuster la synchronisation de transmission pour au moins l'une des antennes, en ajustant une durée de tampon de transmission en liaison descendante.

9. Procédé, mis en oeuvre dans un terminal mobile, d'ajustement d'une synchronisation de réception en liaison descendante, d'une synchronisation de transmission en liaison montante ou des deux, **caractérisé en ce que** le procédé comprend les étapes ci-dessous consistant à :
recevoir (1120) des informations d'assistance en provenance d'un noeud de réseau radio, les informations d'assistance indiquant qu'un ajustement de synchronisation de transmission en liaison descendante pour au moins une antenne du noeud de réseau radio doit se produire ou s'est produit au niveau du noeud de réseau radio ; et
ajuster (1130) la synchronisation de réception en liaison descendante, la synchronisation de transmission en liaison montante, ou les deux, sur la base des informations d'assistance, en vue d'un alignement avec la synchronisation de liaison descendante du noeud de réseau radio.

10. Procédé selon la revendication 9, dans lequel les informations d'assistance spécifient au moins l'un des éléments parmi une quantité d'ajustement ; une synchronisation pour l'ajustement de synchronisation de liaison descendante ; au moins une antenne pour laquelle une synchronisation de liaison descendante est désalignée avec un premier intervalle de temps de seuil ; et au moins une antenne pour laquelle un ajustement de synchronisation de liaison descendante doit se produire.

11. Procédé selon l'une quelconque des revendications 9 à 10, comprenant en outre l'étape consistant à envoyer (1110), en premier lieu, des informations de capacités, au noeud de réseau radio, les informations de capacités indiquant que le terminal mobile peut utiliser des informations d'assistance pour tenir compte de l'ajustement de synchronisation de liaison descendante.

12. Terminal mobile (900), comprenant un émetteur-récepteur radio (910) et un circuit de commande (920), **caractérisé en ce que** le circuit de commande (920) est configuré de manière à :
recevoir des informations d'assistance en provenance d'un noeud de réseau radio, par l'intermédiaire de l'émetteur-récepteur radio (910), les informations d'assistance indiquant qu'un ajustement de synchronisation de transmission en liaison descendante pour au moins une antenne du noeud de réseau radio doit se produire ou s'est produit au niveau du noeud de réseau ; et
ajuster la synchronisation de réception en liaison descendante, la synchronisation de transmission en liaison montante, ou les deux, sur la base des informations d'assistance, en vue d'un alignement avec la synchronisation de liaison descendante du noeud de réseau radio.

13. Terminal mobile (900) selon la revendication 12, dans lequel les informations d'assistance spécifient au moins l'un des éléments parmi : une quantité d'ajustement ; une synchronisation pour l'ajustement de synchronisation de liaison descendante ; au moins une antenne pour laquelle une synchronisation de liaison descendante est désalignée avec un premier intervalle de temps de seuil ; et au moins une antenne pour laquelle un ajustement de synchronisation de liaison descendante doit se produire.

14. Terminal mobile (900) selon la revendication 13, dans lequel la synchronisation pour l'ajustement de synchronisation de liaison descendante est spécifiée en tant qu'un numéro de trame système.

15. Terminal mobile (900) selon l'une quelconque des revendications 12 à 14, dans lequel le circuit de commande (920) est en outre configuré de manière à envoyer, en premier lieu, des informations de capacités au noeud de réseau radio, par l'intermédiaire de l'émetteur-récepteur radio (910), les informations de capacités indiquant que le terminal mobile (900) peut utiliser les informations d'assistance en vue de tenir compte de l'ajustement de synchronisation de liaison descendante.
